# EUROPÄISCHE PATENTSCHRIFT

(11) **EP 2 708 753 B1**
(45) Veröffentlichungstag und Bekanntmachung des Hinweises auf die Patenterteilung: **23.11.2016**
(21) Anmeldenummer: 13182010.2
(22) Anmeldetag: 28.08.2013
(51) Int. Cl.: F04D 19/04, F04D 29/058, F04D 29/66, F04D 29/64, F04D 29/62, F16C 32/04, H01F 41/02

(54) **Verfahren zum Zentrieren einer Vakuumpumpe und/oder zum Reduzieren eines magnetischen Streufelds einer Vakuumpumpe oder einer Rotationseinheit für eine Vakuumpumpe, sowie Vakuumpumpe oder Rotationseinheit für eine Vakuumpumpe**
Method for centring a vacuum pump and/or reducing a magnetic leakage field of a vacuum pump or a rotary unit for a vacuum pump, and vacuum pump or rotation unit for a vacuum pump
Procédé de centrage d'une pompe à vide et/ou de réduction d'un champ de dispersion magnétique d'une pompe à vide ou d'une unité rotative pour une pompe à vide, et pompe à vide ou groupe de rotation pour une pompe à vide

(30) Priorität: 14.09.2012 DE 102012216450
(43) Veröffentlichungstag der Anmeldung: 19.03.2014
(73) Patentinhaber: PFEIFFER VACUUM GMBH, 35614 Asslar (DE)
(72) Erfinder: Conrad, Armin, 35745 Herborn (DE); Koci, Bernd, 35641 Schöffengrund (DE); Rippl, Andreas, 35578 Wetzlar (DE); Wirth, Adrian, 35582 Wetzlar (DE)
(74) Vertreter: Manitz, Finsterwald & Partner GbR

(56) Entgegenhaltungen:
- EP-A2- 1 477 695
- JP-A- S6 230 565
- JP-A- H01 267 389
- JP-U- S58 119 621
- US-A1- 2004 189 123
- US-B1- 6 191 515

## Beschreibung

Die vorliegende Erfindung betrifft ein Verfahren zum Zentrieren einer Vakuumpumpe und/oder zum Reduzieren eines magnetischen Streufelds einer Vakuumpumpe, insbesondere einer Turbomolekularpumpe, oder einer Rotationseinheit für eine Vakuumpumpe, insbesondere für eine Turbomolekularpumpe.

Vakuumpumpen spielen in der Vakuumtechnik eine wichtige Rolle und werden in den unterschiedlichsten technischen Anwendungen zum Absaugen von vornehmlich gasförmigen Medien und zur Evakuierung von Hohlräumen eingesetzt. Dabei kommen unter anderem Turbomolekularpumpen zum Einsatz, welche im molekularen, d.h. nicht-viskosen, Bereich arbeiten und dazu geeignet sind, ein Vakuum mit einer sehr hohen Reinheit zu erzeugen. Turbomolekularpumpen umfassen üblicherweise eine Rotationseinheit, die aus einem Stator und einem gegenüber dem Stator drehbaren Rotor besteht, wobei der Rotor zur Erzeugung des hochreinen Vakuums mit üblicherweise sehr hohen Drehzahlen drehend angetrieben wird.

Bei diesen sehr hohen Drehzahlen kommt einer möglichst reibungsfreien Lagerung des Rotors gegenüber dem Stator eine besondere Bedeutung zu. Diese Lagerung wird üblicherweise durch zwei Lager erreicht, die ein im Bereich der Saugöffnung, d.h. der Hochvakuumseite der Pumpe, angeordnetes Lager und ein in der Nähe der Gasaustrittsöffnung, d.h. der so genannten Vorvakuumseite der Pumpe, angeordnetes Lager umfassen. Da das an der Hochvakuumseite vorgesehene Lager dabei mit dem zu evakuierenden Volumen in Verbindung steht, muss dieses Lager möglichst verschmutzungsfrei ausgeführt sein, um eine Verschmutzung des zu evakuierenden Volumens bzw. der darin enthaltenen Medien zu verhindern. Um die Anforderungen an eine möglichst reibungsarme und gleichzeitig verschmutzungsfreie Lagerung zu erfüllen, ist es bekannt, das an der Hochvakuumseite vorgesehene Lager als Permanentmagnetlager auszuführen, welches beispielsweise einen an dem Stator angebrachten Magnetringstapel und einen an dem Rotor angebrachten Magnetringstapel umfassen kann, die ineinander angeordnet sind und durch ihre gegenseitige magnetische Abstoßung eine drehbare radiale Lagerung gewährleisten.

Bekannte Vakuumpumpen dieser Art weisen typischerweise eine gewisse Exzentrizität auf. Unter einer Exzentrizität wird dabei eine Fehlstellung des Rotors verstanden, welche die Laufeigenschaften der Vakuumpumpe beeinträchtigen und insbesondere in ähnlicher Weise wie eine Unwucht des Rotors zu störenden Vibrationen oder einem "unrunden Lauf" der Vakuumpumpe führen kann. Eine Exzentrizität kann insbesondere darin bestehen, dass der Rotor sich nicht in der Mitte des Stators befindet, d.h. z.B. eine Mittelachse des Rotors von einer Mittelachse des Stators abweicht. Eine solche Exzentrizität kann z.B. durch ein nicht perfekt rotationssymmetrisches Magnetfeld des Stators hervorgerufen werden. Eine Exzentrizität kann auch darin bestehen, dass sich die Mittelachse des Rotors während einer Drehung des Rotors gegenüber einer gewünschten Ruheposition bewegt, so dass der Rotor nicht rund läuft. Eine solche Exzentrizität kann insbesondere durch ein nicht perfekt rotationssymmetrisches Magnetfeld des Rotors hervorgerufen werden.

Aufgrund einer vorhandenen Exzentrizität einer Vakuumpumpe kann bei sehr hohen Drehzahlen häufig kein gleichmäßiges Laufverhalten der Vakuumpumpe mehr gewährleistet werden, da z.B. durch die Exzentrizität hervorgerufene Vibrationen auftreten können. Die maximale Drehzahl, bis zu der eine Vakuumpumpe dauerhaft sicher und zuverlässig betrieben werden kann, ist folglich durch die Exzentrizität begrenzt, ebenso wie die demzufolge erreichbare Saugleistung und die erreichbare Reinheit des Vakuums. Vibrationen wirken sich außerdem bei bestimmten Anwendungen störend aus, in denen eine Vakuumpumpe eingesetzt werden kann, wie z.B. bei der Elektronenmikroskopie, bei der Vibrationen der Vakuumpumpe die erreichbare Auflösung und Schärfe des durch das Elektronenmikroskop erzeugten Bildes reduzieren. Außerdem kann die Lebensdauer eines in der Vakuumpumpe zusätzlich zu dem Magnetlager vorgesehenen mechanischen Lagers reduziert werden. Eine die Laufeigenschaften der Pumpe beeinträchtigende Exzentrizität, die z.B. ähnlich wie eine nicht perfekt rotationssymmetrische Massenverteilung bzw. Unwucht des Rotors zu Vibrationen führen kann, kann dabei durch eine nicht perfekte gegenseitige Lagerung von Rotor und Stator verursacht sein, beispielsweise aufgrund einer nicht perfekt rotationssymmetrischen Verteilung der durch das Magnetlager ausgeübten Lagerkräfte bzw. einer nicht perfekt rotationssymmetrischen Verteilung der von dem statorseitigen Teil und/oder dem rotorseitigen Teil des Lagers jeweils erzeugten Magnetfeldverteilung.

Nachteilig bei bekannten Vakuumpumpen der genannten Art ist ferner das magnetische Streufeld, welches das Permanentmagnetlager in der Umgebung des Permanetmagnetlagers und in der Umgebung der Vakuumpumpe erzeugt. Problematisch ist insbesondere das lokal zeitveränderliche magnetische Wechselfeld, welches bei drehendem Rotor infolge einer nicht perfekt rotationssymmetrischen Magnetfeldverteilung des rotorseitigen Teils des Magnetlagers erzeugt wird. Starke magnetische Wechselfelder können z.B. bei einem Einsatz der Vakuumpumpe in der Mikroskopie zu einer Reduktion der erreichbaren Bildauflösung oder bei einem Einsatz in der Teilchenspektroskopie zu einer Verringerung der Energieauflösung des Detektors führen.

Um eine die Laufeigenschaften der Vakuumpumpe beeinträchtigende Exzentrizität oder Unwucht und ein störendes magnetisches Streufeld möglichst zu vermeiden, können bei der Herstellung von Vakuumpumpen Komponenten verwendet werden, die die vorgegebenen Spezifikationen, insbesondere hinsichtlich ihrer Geometrie und ihrer Massenverteilung und - im Falle der Magnetringe - ihres magnetischen Verhaltens und insbesondere hinsichtlich der Rotationssymmetrie der vorgenannten Eigenschaften, exakt bzw. im Rahmen von sehr engen Toleranzen erfüllen. Die Herstellungskosten für eine Vakuumpumpe werden durch diese hohen Anforderungen an die verwendeten Komponenten erheblich gesteigert, wobei insbesondere die Beschaffung der die erforderliche Präzision aufweisenden Magnetringe für das Permanentmagnetlager mit erheblichen Kosten verbunden ist. Selbst wenn ideale Magnetringe verwendet werden, kann eine Exzentrizität oder ein störendes Streufeld infolge einer Abweichung der Position der montierten Magnetringe von der vorgesehenen Sollposition, beispielsweise infolge einer Verkippung, einer exzentrischen Positionierung oder einer durch die Festlegung der Magnetringe im Presssitz hervorgerufenen Verformung bzw. Unrundheit, auftreten. Auch ideale Magnetringe können somit in ihrem in eine Vakuumpumpe eingebauten Zustand zu einem nicht idealen Magnetlager führen. Trotz des hohen Aufwands für die Herstellung und Montage der Vakuumpumpe lässt sich eine Exzentrizität oder ein störendes Streufeld der Vakuumpumpe folglich nicht völlig vermeiden, so dass die auf diese Weise erreichbare Gleichmäßigkeit des Laufverhaltens der Vakuumpumpen und somit deren zulässige Betriebsdrehzahl und die erreichbare Reinheit des Vakuums ebenso begrenzt bleiben wie die erreichbare Unterdrückung störender Streufelder. Um eine nachteilige Beeinflussung benachbarter Komponenten durch das von der Vakuumpumpe erzeugte magnetische Streufeld zu vermeiden, könnte auch eine magnetische Abschirmung an dem Pumpengehäuse vorgesehen werden oder die benachbarte Komponente in einem größeren Abstand von der Vakuumpumpe angeordnet werden, was aber nur mit hohem Aufwand möglich ist und weitere Nachteile mit sich bringt.

EP 1 477 695 A2 offenbart ein Verfahren gemäß dem Oberbegriff des Anspruchs 1 sowie eine Vorrichtung gemäß dem Oberbegriff des Anspruchs 12.

Aufgabe der Erfindung ist es, ein Verfahren anzugeben, mit dem eine Vakuumpumpe, insbesondere eine Turbomolekularpumpe, oder eine Rotationseinheit für eine Vakuumpumpe bzw. Turbomolekularpumpe bereitgestellt wird, die auch bei sehr hohen Drehzahlen dauerhaft zuverlässig und verschleißarm betrieben werden kann und bei ihrem Betrieb nur ein geringes magnetisches Streufeld erzeugt, wobei das Verfahren gleichzeitig mit verringertem Kostenaufwand durchgeführt werden kann. Aufgabe der Erfindung ist ferner die Angabe einer Vakuumpumpe, insbesondere Turbomolekularpumpe, oder einer Rotationseinheit für eine Vakuumpumpe bzw. Turbomolekularpumpe, die bei sehr hohen Drehzahlen dauerhaft zuverlässig und verschleißarm betrieben werden kann, bei ihrem Betrieb ein geringes Streufeld aufweist und mit verringertem Kostenaufwand bereitgestellt werden kann.

Die Aufgabe wird durch ein Verfahren mit den Merkmalen des Anspruchs 1 und durch eine Vakuumpumpe mit den Merkmalen des Anspruchs 12 gelöst.

Die Erfindung schafft ein Verfahren zum Zentrieren einer Vakuumpumpe und/oder zum Reduzieren eines magnetischen Streufelds einer Vakuumpumpe bzw. eines Permanentmagnetlagers einer Vakuumpumpe, insbesondere einer Turbomolekularpumpe, oder einer Rotationseinheit für eine Vakuumpumpe, insbesondere für eine Turbomolekularpumpe. Die Vakuumpumpe bzw. die Rotationseinheit weist einen Rotor und einen Stator mit wenigstens einem Permanentmagnetlager auf, welches zur gegenseitigen drehbaren Lagerung des Rotors und des Stators ausgebildet ist. Gemäß dem Verfahren werden ausgehend von einem Exzentrizitätszustand und/oder ausgehend von einem magnetischen Streufeldzustand der Pumpe die Form und/oder die materialspezifischen permanentmagnetischen Eigenschaften des Lagers verändert, um dadurch das von dem Lager erzeugte Magnetfeld zur Verringerung der Exzentrizität und/oder des von dem Lager zumindest im Betrieb der Vakuumpumpe erzeugten magnetischen Streufelds zu verändern und damit die Zentrierung bzw. die Streufeldeigenschaften zu verbessern.

Erfindungsgemäß wurde erkannt, dass sich die Laufeigenschaften und das Streufeldverhalten einer Vakuumpumpe in vorteilhafter Weise verändern lassen und sich eine vorhandene Exzentrizität und/oder ein störendes Streufeld dadurch verringern und zumindest annähernd ganz beseitigen lässt, dass ausgehend von einem Exzentrizitätszustand bzw. einem Streufeldzustand der Pumpe die geometrische Form und/oder die materialspezifischen permanentmagnetischen Eigenschaften, wie z.B. die materialspezifische magnetische Remanenz und/oder die Koerzitivfeldstärke des Materials des Lagers, insbesondere lokal, verändert werden. Durch eine solche Veränderung wird die Verteilung der durch das Magnetlager erzeugten Magnetfelder und der ausgeübten Lagerkräfte beeinflusst, so dass eine unmittelbare und hochwirksame Anpassung der Zentrier- bzw. Streufeldverhältnisse erreicht wird. Durch die Möglichkeit, das Magnetfeld und dadurch die Zentrier- bzw. Streufeldverhältnisse gezielt lokal und flexibel an die ursprüngliche Exzentrizität bzw. das ursprüngliche Streufeld anzupassen, lässt sich unabhängig von den ursprünglichen Zentrier- bzw. Streufeldverhältnissen eine Beseitigung der ursprünglichen Exzentrizität oder des Streufelds bzw. zumindest eine Verringerung der Exzentrizität oder des Streufelds auf einen unproblematischen Wert erreichen.

Durch die Veränderungen kann die Verteilung der in dem Magnetlager vorhandenen Inhomogenitäten so manipuliert oder durch zusätzliche Inhomogenitäten ergänzt werden, dass die Exzentrizität bzw. das Streufeldverhalten reduziert und z.B. an die für eine jeweilige Anwendung erforderlichen Schwellwerte angepasst wird.

Unter der Exzentrizität der Vakuumpumpe wird, wie vorstehend beschrieben, eine die Laufeigenschaften der Vakuumpumpe beeinträchtigende Fehlstellung des Rotors verstanden. Unter dem Zentrieren der Vakuumpumpe bzw. des Permanentmagnetlagers ist dementsprechend die Verringerung dieser Fehlstellung zu verstehen bzw. die Beseitigung dieser Fehlstellung zumindest so weit, dass ein für die Praxis akzeptabler runder Lauf der Vakuumpumpe gewährleistet wird.

Die vorstehend beschriebene Veränderung lässt sich mit einfachen Mitteln realisieren und kann sowohl an dem rotorseitigen Lagerteil als auch an dem statorseitigen Lagerteil vorgenommen werden, insbesondere um eine rotorseitig verursachte Exzentrizität ebenso zu beseitigen wie eine statorseitig verursachte Exzentrizität und um ein störendes Streufeld zu vermeiden.

Dabei hat sich gezeigt, dass sich eine rotorseitige Exzentrizität, d.h. insbesondere eine durch eine nicht perfekt rotationssymmetrische Verteilung des durch den rotorseitigen Teil des Lagers erzeugten Magnetfelds hervorgerufene Exzentrizität, und eine statorseitige Exzentrizität , d.h. insbesondere eine durch eine nicht perfekt rotationssymmetrische Verteilung des durch den statorseitigen Teil des Lagers erzeugten Magnetfelds hervorgerufene Exzentrizität, durch die Veränderung des jeweiligen Lagerteils prinzipiell im Wesentlichen unabhängig voneinander eliminieren lassen, ohne dass Wechselbeziehungen oder -wirkungen zwischen beiden Exzentrizitäten berücksichtigt werden müssen, so dass eine ganzheitliche Zentrierung der Pumpe bzw. Rotationseinheit einfach durchführbar ist.

Durch die Zentrierung werden die Zentrierverhältnisse in der Vakuumpumpe derart optimiert, dass auch bei sehr hohen Drehzahlen ein dauerhaft zuverlässiger und verschleißarmer Betrieb der Vakuumpumpe möglich ist. Mit dem Verfahren können sogar die Zentrierverhältnisse in Pumpen bzw. Rotationseinheiten, die aus weniger präzisen und somit kostengünstigeren Komponenten aufgebaut sind, derart angepasst werden, dass diese die für den Betrieb mit hohen Drehzahlen bestehenden Anforderungen erfüllen.

Unter dem magnetischen Streufeld der Vakuumpumpe wird das von dem Lager erzeugte und außerhalb des Lagers vorhandene magnetische Feld verstanden. Wie nachstehend beschrieben, kann das Streufeld insbesondere ein lokal zeitveränderliches Wechselfeld umfassen, welches erzeugt wird, wenn der Rotor bei dem Betrieb der Vakuumpumpe rotiert.

Vorteilhafte Ausführungsformen sind in den Unteransprüchen, der Beschreibung und den Figuren beschrieben.

Die vorliegende Erfindung bezieht sich gleichermaßen auf eine Vakuumpumpe als auch auf eine Rotationseinheit, d.h. die den Rotor und den Stator enthaltende Baugruppe, einer solchen Vakuumpumpe. Wenn im Nachfolgenden die vorteilhaften Ausführungsformen der Erfindung unter Bezugnahme auf eine Vakuumpumpe erläutert sind, sind diese Erläuterungen, soweit anwendbar, auch auf die Anwendung der Erfindung auf eine Rotationseinheit für eine Vakuumpumpe zu beziehen. Ebenso ist, wenn hierin allgemein Bezug auf eine "Vorrichtung" genommen wird, darunter eine Vakuumpumpe, wie insbesondere eine Turbomolekularpumpe, ebenso zu verstehen wie eine Rotationseinheit für eine Vakuumpumpe, insbesondere für eine Turbomolekularpumpe.

Gemäß einer vorteilhaften Ausführungsform weist der verwendete Rotor und/oder der Stator zur Bildung des rotor- bzw. statorseitigen Teils des Magnetlagers in an sich bekannter Weise jeweils wenigstens einen permanentmagnetischen Ring, bevorzugt einen Ringstapel, auf, wobei zur Verringerung der Exzentrizität und/oder des magnetischen Streufelds vorzugsweise wenigstens einer der Ringe hinsichtlich seiner Form und/oder seiner materialspezifischen permanentmagnetischen Eigenschaften, insbesondere permanent, verändert wird.

Die Rotorringe und/oder Statorringe können dabei zum Beispiel einen im Wesentlichen zylindermantelförmigen Ringstapel des Rotors bzw. Stators bilden, in dem die jeweiligen Ringe im Wesentlichen konzentrisch und bevorzugt koaxial übereinander gestapelt sind. Der Ringstapel des Rotors und der Ringstapel des Stators sind dabei vorzugsweise im Wesentlichen koaxial ineinander angeordnet, wobei der statorseitige Ringstapel vorzugsweise innerhalb des rotorseitigen Ringstapels angeordnet ist. Zwischen den beiden Ringstapeln ist vorzugsweise ein, insbesondere radialer, Spalt des Magnetlagers ausgebildet ist, welcher durch die radiale Innenfläche des einen Ringstapels und die radiale Außenfläche des anderen Stapels begrenzt sein kann. Dabei stehen sich im Bereich des Spalts bevorzugt gleiche Pole des Rotors und des Stators gegenüber, d.h. der statorseitige Teil des Lagers und der rotorseitige Teil des Lagers sind über abstoßende magnetische Kräfte miteinander gekoppelt. Das Lager erzeugt vorzugsweise eine positive radiale Lagersteifigkeit. Die Magnetringe sind vorzugsweise in axialer Richtung magnetisiert, wobei die Orientierung der axialen Magnetisierung in axialer Richtung von Ring zu Ring alternieren kann.

Das Permanentmagnetlager weist vorzugsweise einen aus Samarium-Cobalt oder Neodym-Eisen-Bor gebildeten bzw. Samarium-Cobalt und/oder Neodym-Eisen-Bor enthaltenden Permanentmagneten auf, beispielsweise einen oder mehrere stator- oder rotorseitige Permanentmagnetringe, die zumindest eines der Materialien Samarium-Cobalt, Neodym-Eisen-Bor oder ein Ferrit auf Strontiumferritbasis oder auf Bariumferritbasis oder eine Kombination dieser Materialien enthalten oder aus einem oder mehreren dieser Materialien gebildet sind. Die vorstehend genannten Materialien sind besonders geeignet, um die für die Lagerung erforderlichen magnetischen Lagerkräfte zu erzeugen.

Bevorzugt wird der Grad der Rotationssymmetrie des von dem rotorseitigen Teil und/oder von dem statorseitigen Teil des Magnetlagers erzeugten Magnetfelds durch die Veränderung der Form und/oder der materialspezifischen permanentmagnetischen Eigenschaften des Lagers erhöht und die Inhomogenität des Magnetfelds verringert, um die Exzentrizität und/oder das magnetische Streufeld der Vakuumpumpe zu verringern.

Gemäß einer vorteilhaften Ausführungsform des Verfahrens wird die in dem Exzentrizitätszustand vorhandene Exzentrizität der Vakuumpumpe bzw. des Rotors und/oder Stators und/oder das in dem Streufeldzustand vorhandene magnetische Streufeld gemessen und die Veränderung abhängig von der gemessenen Exzentrizität und/oder abhängig von dem gemessenen magnetischen Streufeld derart vorgenommen, dass die Exzentrizität und/oder das magnetische Streufeld verringert wird.

Die Veränderung des Magnetlagers kann prinzipiell an dem rotorseitigen Teil des Magnetlagers, an dem statorseitigen Teil des Magnetlagers, oder an dem rotorseitigen Teil und dem statorseitigen Teil des Magnetlagers vorgenommen werden.

Die Exzentrizität der Vakuumpumpe kann sich prinzipiell aus einer durch den Stator und einer durch den Rotor verursachten Exzentrizität zusammensetzen, wobei unter der statorseitigen bzw. rotorseitigen Exzentrizität insbesondere eine Exzentrizität verstanden wird, die durch eine nicht gleichmäßige, insbesondere nicht rotationssymmetrische Verteilung der durch den rotor- bzw. statorseitigen Teil des Magnetlagers erzeugten Magnetfelder bzw. Lagerkräfte erzeugt wird. Ein ungleichmäßiges Magnetfeld des statorseitigen Teils des Lagers kann z.B. zu einer Abweichung der Mitte bzw. Mittelachse des Rotors von einer Mitte bzw. Mittelachse des Stators führen, während ein ungleichmäßiges Magnetfeld des rotorseitigen Teils des Lagers zu einer Bewegung der Mitte bzw. Mittelachse des Rotors gegenüber einer gewünschten Ruheposition während einer Drehung des Rotors führen kann. Das Messen der Exzentrizität kann z.B. mit mechanischen oder optischen Tastern bei dem langsamen Drehen des Rotors oder des Stators des Permanentmagnetlagers in einer passenden Vorrichtung erfolgen.

Um die gemessene Exzentrizität zu verringern, wird das durch das Lager erzeugte Magnetfeld so verändert, dass die Veränderung der gemessenen Exzentrizität entgegengerichtet ist. Beispielsweise kann, wenn erkannt wird, dass an einer bestimmten radialen Position des Rotors stets eine übermäßig große Weite des Spalts des Magnetlagers, d.h. des Spalts zwischen Rotorstapel und Statorstapel, auftritt, das von dem rotorseitigen Teil des Magnetlagers erzeugte Magnetfeld an der entsprechenden Stelle durch die Veränderung geschwächt werden, um die abstoßende Kraft zu dem statorseitigen Teil des Lagers zu verringern und somit die entsprechende Exzentrizität zu beseitigen. Ebenso kann, wenn festgestellt wird, dass an einer bestimmten radialen Position des Stators stets ein besonders großer Spalt zwischen Rotor und Stator auftritt, das von dem statorseitigen Teil des Magnetlagers erzeugte Magnetfeld entsprechend reduziert werden.

Vorzugsweise wird die Exzentrizität des Rotors ermittelt und eine Veränderung der Form und/oder der materialspezifischen permanentmagnetischen Eigenschaft des rotorseitigen Teils des Lagers derart vorgenommen, dass die durch den Rotor hervorgerufene Exzentrizität verringert wird. Ferner kann, bevorzugt zusätzlich zu der vorstehend beschriebenen Kompensation der Exzentrizität des Rotors, die Exzentrizität des Stators ermittelt und eine Veränderung der Form und/oder der materialspezifischen permanentmagnetischen Eigenschaft des statorseitigen Teils des Lagers derart vorgenommen werden, dass die Exzentrizität des Stators verringert wird. Die Exzentrizität des Rotors oder des Stators ist dabei insbesondere durch eine etwaig nicht perfekt rotationssymmetrische Verteilung des durch den rotorseitigen bzw. statorseitigen Teil des Magnetlagers erzeugten Magnetfelds gebildet.

Die Exzentrizität des Rotors und die Exzentrizität des Stators lassen sich dabei im Wesentlichen unabhängig voneinander beseitigen. Die Exzentrizitäten des Rotors und des Stators können prinzipiell durch verschiedene, getrennt voneinander durchgeführte Exzentrizitätsmessungen ermittelt werden, sie können aber auch durch eine gemeinsame Exzentrizitätsmessung ermittelt werden.

Vorzugsweise wird nach einer Exzentrizitätsmessung abhängig von der gemessenen Exzentrizität die Veränderung ermittelt und durchgeführt, die notwendig ist, um die gemessene Exzentrizität zumindest annähernd vollständig zu beseitigen. Prinzipiell kann der Zentriervorgang allerdings auch iterativ erfolgen, d.h. dass mehrfach eine Veränderung der Form und/oder der materialspezifischen permanentmagnetischen Eigenschaften des Permanentmagnetlagers durchgeführt wird, wobei vorzugsweise unmittelbar vor jeder Veränderung eine Messung der Exzentrizität durchgeführt wird.

Das magnetische Streufeld kann ein lokal zeitveränderliches Wechselfeld umfassen, welches insbesondere durch die Inhomogenitäten und Imperfektionen des rotorseitigen Teils des Lagers hervorgerufen wird, wenn der Rotor bei dem Betrieb der Vakuumpumpe rotiert. Die Frequenzen des erzeugten Wechselfelds können ganzzahlige Vielfache der Rotordrehzahl sein. Bevorzugt wird das Lager verändert, um dieses Wechselfeld zu reduzieren. Dadurch werden nachteilige Auswirkungen eines solchen Wechselfelds auf mit der Vakuumpumpe verbundene Komponenten wie z.B. ein Mikroskop oder eine andere Messapparatur vermieden.

Gemäß einer Ausführungsform werden zur Verringerung des magnetischen Streufelds die Form und/oder die materialspezifischen permanentmagnetischen Eigenschaften des rotorseitigen Teils des Lagers verändert, insbesondere die Form und/oder die Eigenschaften eines oder mehrerer Rotorringe des Lagers. Dabei kann die magnetische Rotationssymmetrie des rotorseitigen Lagerteils erhöht und dessen magnetische Inhomogenität verringert werden. Auf diese Weise lässt sich ein durch die Rotation des Rotors im Betrieb der Vakuumpumpe hervorgerufenes störendes Wechselfeld wirksam vermeiden.

Gemäß einer vorteilhaften Ausführungsform werden zur Verringerung der Exzentrizität die Form und/oder die materialspezifischen permanentmagnetischen Eigenschaften in einem Bereich des rotorseitigen Teils und/oder in einem Bereich des statorseitigen Teils des Lagers verändert, der eine zu dem jeweils anderen Teil des Lagers hin weisende Oberfläche bildet. Beispielsweise können der rotorseitige und/oder statorseitige Lagerteil jeweils im Bereich einer radialen Innen- bzw. Außenfläche verändert werden, welche einen radialen Spalt des Magnetlagers begrenzt. Dadurch wird eine besonders wirksame Veränderung der magnetischen Lagerkräfte und damit der Exzentrizität erreicht. Die Veränderung wird vorzugsweise an zumindest einem Rotorring oder Statorring des Lagers bzw. deren radialer Innen- bzw. Außenfläche vorgenommen.

Gemäß einer weiteren Ausführungsform wird zur Verringerung des magnetischen Streufelds die Form und/oder die materialspezifischen permanentmagnetischen Eigenschaften in einem Bereich des rotorseitigen Teils des Lagers verändert, der eine von dem statorseitigen Teil des Lagers weg weisende Oberfläche bildet. Beispielsweise kann der rotorseitige Lagerteil im Bereich seiner von dem anderen Lagerteil und insbesondere einem radialen Lagerspalt des Lagers abgewandten radialen Innen- bzw. Außenfläche verändert werden. Dadurch kann das von dem Lager in dem Außenbereich des Lagers erzeugte magnetische Streufeld wirksam beeinflusst werden, ohne dass die über den Lagerspalt übertragenen Lagerkräfte in störender Weise beeinflusst werden. Dadurch wird verhindert, dass die Verringerung des Streufelds zu einer nachteiligen Erhöhung der Exzentrizität führt.

Die Zentrierung und/oder die Verringerung des magnetischen Streufelds kann im Rahmen der Erfindung rein durch eine Formveränderung oder rein durch eine Veränderung der materialspezifischen magnetischen Eigenschaften des Lagers erfolgen, oder eine Kombination beider Maßnahmen umfassen. Ebenso können die nachfolgend beschriebenen konkreten Maßnahmen zur Formveränderung und/oder materialspezifischen Veränderung jeweils ausschließlich oder in beliebiger Kombination miteinander eingesetzt werden, um die Zentrierung durchzuführen.

Gemäß einer vorteilhaften Ausführungsform wird von dem Lager, insbesondere von zumindest einem Rotorring und/oder von wenigstens einem Statorring, Material entfernt, um das Magnetfeld zu verändern. Dies stellt eine besonders einfache und zugleich wirksame Art dar, das Magnetfeld der ursprünglichen Exzentrizität bzw. dem ursprünglichen Streufeld entsprechend zu verändern und anzupassen, um dadurch die Pumpe bzw. Rotationseinheit zu zentrieren bzw. magnetisch auszuwuchten oder das Streufeld zu verringern. Es lässt sich dabei mit einfachen Mitteln eine lokal gezielte und fein abgestimmte Anpassung der Zentrier- bzw. Streufeldverhältnisse erzielen. Beispielsweise kann das Magnetfeld durch die Materialentfernung lokal geschwächt werden, um eine übermäßige magnetische Abstoßungskraft zwischen den beiden Lagerpartnern in dem entsprechenden Bereich zu beseitigen oder um eine für ein störendes Streufeld verantwortliche Konzentration des Magnetfelds zu beseitigen.

Das Material wird bevorzugt durch eine mechanische Bearbeitung entfernt, z.B. durch ein spanabhebendes mechanisches Bearbeitungsverfahren. Ein solches Verfahren eignet sich besonders für eine kontrollierbare und lokal fein abstimmbare Veränderung des Magnetfelds, welche ein entsprechend vollständiges Zentrieren und/oder eine Verringerung eines störenden Streufelds ermöglicht. Das spanabhebende Verfahren kann beispielsweise aus der Gruppe Schleifen, Bohren und Drehen ausgewählt sein. Eine durch die Formveränderung bzw. Materialentfernung etwaig entstehende Änderung der Massenverteilung bzw. der Wuchtverhältnisse des Rotors kann in einem nachfolgenden standardmäßigen Auswuchtverfahren korrigiert werden, soweit ein solches nach der Zentrierung bzw. Streufeldverringerung überhaupt erforderlich sein sollte.

Alternativ oder zusätzlich kann das Lager, insbesondere zumindest ein Rotorring und/oder wenigstens ein Statorring, zumindest in einem Bereich entmagnetisiert werden. Das bedeutet, dass das Material des Lagers so behandelt wird, dass es seine permanentmagnetische Eigenschaft dauerhaft zumindest teilweise verliert. Auch auf diese Weise lässt sich eine wirksame, fein abstufbare und lokal flexibel an die bestehende Exzentrizität und/oder das bestehende Streufeld anpassbare Beeinflussung der Zentrier- bzw. Streufeldverhältnisse durchführen.

Das Lager bzw. zumindest ein Rotorring und/oder zumindest ein Statorring kann mit einer, insbesondere optischen, Strahlung bestrahlt oder mit einer Impulsbearbeitung bearbeitet werden, z.B. um das Material des Lagers lokal zu entmagnetisieren.

Gemäß einer Ausführungsform wird das Lager, insbesondere zumindest ein Rotorring und/oder wenigstens ein Statorring, zumindest in einem Bereich erwärmt, und zwar vorzugsweise auf eine Temperatur, oberhalb der das permanentmagnetische Material des Lagers seine permanentmagnetische Eigenschaft dauerhaft zumindest teilweise verliert.

Die Erwärmung kann beispielsweise durch Wärmebestrahlung erfolgen. Vorzugsweise wird das Lager durch Bestrahlen mit einer optischen Strahlung, insbesondere Laserstrahlung, erwärmt. Bei der Verwendung von Laserstrahlung lässt sich die örtliche Verteilung und die Temperatur der Erwärmung besonders gezielt einstellen und genau steuern, so dass eine besonders präzise Zentrierung bzw. Anpassung des Streufelds ermöglicht wird.

Die Veränderung der Form und/oder der materialspezifischen permanentmagnetischen Eigenschaften kann allgemein durch eine Bearbeitung des Materials des Permanentmagnetlagers erfolgen und insbesondere durch die vorstehend beschriebene Materialentfernung und/oder Entmagnetisierung. Im Rahmen der Erfindung kann das Permanentmagnetlager außerdem derart aus einzelnen Magneten aufgebaut werden, dass eine Exzentrizität und/oder ein störendes Streufeld der Vakuumpumpe bereits durch den Aufbau des Permanentmagnetlagers weitmöglichst vermieden wird. Wenn der rotorseitige Teil und der statorseitige Teil des Permanentmagnetlagers jeweils aus mehreren aufeinander gestapelten Magnetringen aufgebaut werden, kann z.B. eine relative Anordnung und Winkelorientierung der Magnetringe bestimmt werden, welche zu einer besonders geringen Exzentrizität und einem besonders geringen Streufeld führt. Die Bestimmung des Aufbaus kann umfassen, dass die örtlichen Verteilungen der Magnetfelder, die jeweils von einem von mehreren zur Verfügung stehenden Magnetringen erzeugt werden, gemessen werden und der optimale Aufbau abhängig von diesen Messungen ermittelt wird. Nachdem der geeignete Aufbau festgelegt wurde, kann anschließend die Bearbeitung des Materials der Magnetringe erfolgen, um die Exzentrizität bzw. das Streufeld noch weiter zu verringern.

Eine erfindungsgemäße Vakuumpumpe, insbesondere Turbomolekularpumpe, oder Rotationseinheit für eine Vakuumpumpe, insbesondere für eine Turbomolekularpumpe, weist einen Rotor und einen Stator mit wenigstens einem Permanentmagnetlager auf, welches zur gegenseitigen drehbaren Lagerung des Rotors und des Stators ausgebildet ist.
Die Form und/oder die materialspezifischen permanentmagnetischen Eigenschaften des Lagers sind dabei ausgehend von einem Exzentrizitätszustand und/oder ausgehend von einem magnetischen Streufeldzustand verändert und die Pumpe bzw. Rotationseinheit dadurch zentriert und/oder in Bezug auf ihr Streufeldverhalten verbessert worden.

Die erfindungsgemäße zentrierte Vakuumpumpe oder Rotationseinheit weist gegenüber einer entsprechenden nicht zentrierten Vakuumpumpe verbesserte Laufeigenschaften auf, die auch bei hohen Drehzahlen einen dauerhaft zuverlässigen und verschleißarmen Betrieb gewährleisten, und kann darüber hinaus mit geringem Kostenaufwand bereitgestellt werden, insbesondere nach einem wie hierin beschriebenen erfindungsgemäßen Verfahren. Die in Bezug auf ihr Streufeldverhalten verbesserte Vakuumpumpe weist kein übermäßiges störendes magnetisches Streufeld auf und ist daher für die Verwendung in Anwendungen geeignet, die gegenüber solchen Streufeldern empfindlich sind. Die vorstehend in Bezug auf das Verfahren beschriebenen Vorteile und vorteilhaften Ausführungsformen gelten, soweit anwendbar, entsprechend für die erfindungsgemäße Vakuumpumpe und Rotationseinheit.

Der Rotor und/oder der Stator können, wie vorstehend in Bezug auf das Verfahren bereits beschrieben, zur Bildung des Magnetlagers jeweils wenigstens einen permanentmagnetischen Ring, bevorzugt einen Ringstapel, aufweisen.

Gemäß einer vorteilhaften Ausführungsform ist von dem Lager, insbesondere von zumindest einem Rotorring und/oder von wenigstens einem Statorring, Material entfernt worden. Das Material kann beispielsweise durch ein spanabhebendes mechanisches Bearbeitungsverfahren entfernt worden sein, wobei vorzugsweise ein Verfahren aus der Gruppe Schleifen, Bohren und Drehen verwendet worden ist.

Ferner kann das Lager, insbesondere zumindest ein Rotorring und/oder wenigstens ein Statorring des Lagers, zumindest in einem Bereich auf eine Temperatur erwärmt worden sein, oberhalb der das ursprüngliche Material des Lagers seine permanentmagnetische Eigenschaft dauerhaft zumindest teilweise verliert, so dass das resultierende Material z.B. eine geringere Remanenz und/oder Koerzitivfeldstärke als das ursprüngliche Material vor der Wärmebehandlung aufweist. Die Erwärmung kann dabei z.B. durch Bestrahlung des Lagers mit einer optischen Strahlung, z.B. einem Laserstrahl, durchgeführt worden sein.

Gemäß einer vorteilhaften Ausführungsform sind die Form und/oder die materialspezifischen permanentmagnetischen Eigenschaften in einem Bereich des rotorseitigen Teils und/oder des statorseitigen Teils des Lagers, insbesondere zumindest eines Rotorrings und/oder zumindest eines Statorrings, verändert worden, der eine zu dem jeweils anderen Teil des Lagers hin weisende Oberfläche bildet. Eine solche Vakuumpumpe weist eine besonders wirksam angepasste Exzentrizität auf.

Gemäß einer weiteren Ausführungsform sind die Form und/oder die materialspezifischen permanentmagnetischen Eigenschaften in einem Bereich des rotorseitigen Teils des Lagers, insbesondere zumindest eines Rotorrings, verändert worden, der eine von dem statorseitigen Teil des Lagers weg weisende Oberfläche bildet. Eine solche Vakuumpumpe weist ein besonders wirksam angepasstes Streufeld auf.

Nachfolgend wird die vorliegende Erfindung beispielhaft anhand einer vorteilhaften Ausführungsform unter Bezugnahme auf die beigefügten Figuren beschrieben. Es zeigen:
- Fig. 1: eine Vakuumpumpe in perspektivischer Darstellung,
- Fig. 2: einen Axialschnitt der in Fig. 1 gezeigten Vakuumpumpe, und
- Fig. 3: eine geschnittene Detailansicht des Magnetlagers der in Fig. 1 und 2 gezeigten Vakuumpumpe.

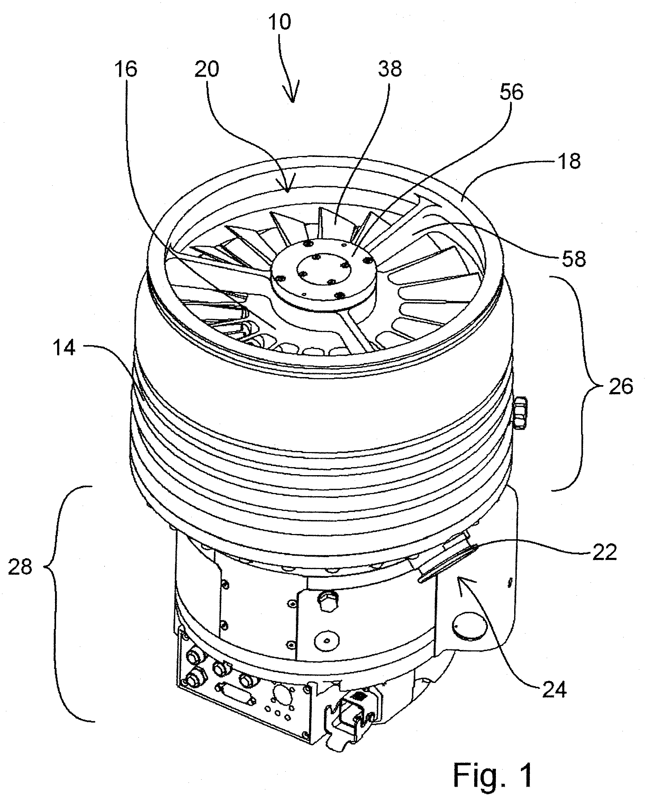

Fig. 1 zeigt eine als Turbomolekularpumpe ausgebildete Vakuumpumpe 10 in perspektivischer Ansicht.

Die Vakuumpumpe 10 umfasst einen Stator, welcher einen Teil eines mehrteiligen Pumpengehäuses 14 umfasst, sowie einen Rotor 16, der gegenüber dem Stator drehend antreibbar gelagert ist.

Die Vakuumpumpe 10 umfasst an ihrer Hochvakuumseite eine von einem Saugflansch 18 umgebene Ansaugöffnung 20 zur Verbindung mit einem zu evakuierenden Volumen und eine im Bereich der Vorvakuumseite der Vakuumpumpe 10 angeordnete, von einem Vorvakuumflansch 22 umgebene Gasaustrittsöffnung 24 zur Verbindung mit einem Vorvakuum.

Der Stator und der Rotor 16 bilden zusammen eine Rotationseinheit 26 der Vakuumpumpe 10, die mit einem Basisabschnitt bzw. Unterteil 28 der Pumpe 10 lösbar verbunden ist.

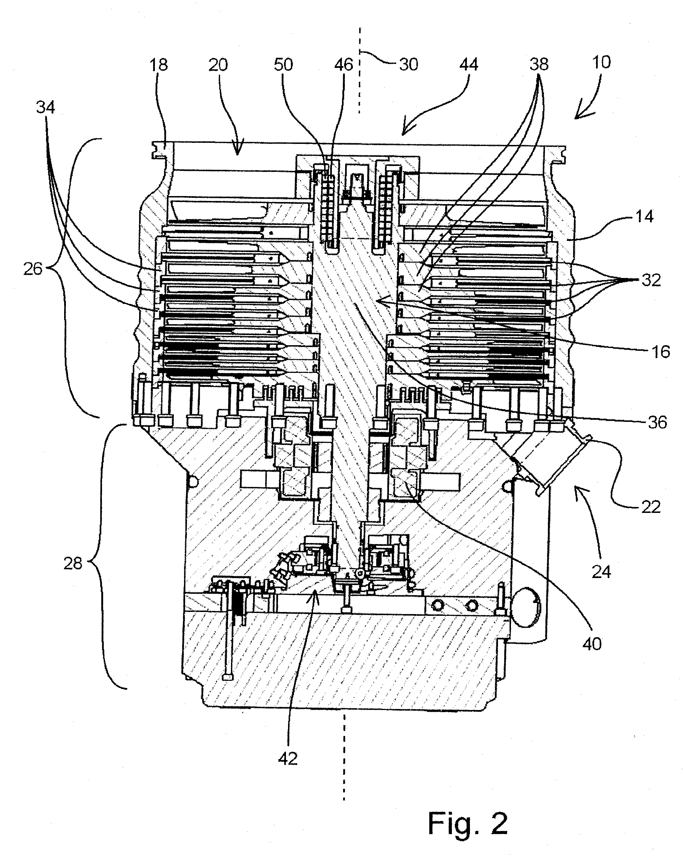

Fig. 2 zeigt die Vakuumpumpe 10 von Fig. 1 in einer entlang ihrer Rotationsachse 30 teilweise geschnittenen Ansicht. Der Stator umfasst mehrere Statorscheiben 32, die in dem Gehäuse 14 angeordnet und über Distanzelemente 34 in einem definierten Abstand voneinander gehalten sind.

Der Rotor 16 umfasst eine Rotorwelle 36, welche mehrere Rotorscheiben 38 trägt, wobei jeweils eine Rotorscheibe 38 in dem Zwischenraum zwischen zwei Statorscheiben 32 angeordnet ist. Die Statorscheiben 32 und Rotorscheiben 38 weisen jeweils eine mehrere Schaufeln umfassende pumpaktive Struktur auf, so dass eine Statorscheibe 32 jeweils mit der benachbarten Rotorscheibe 38 eine Pumpstufe der Turbomolekularpumpe 10 bildet.

In dem Unterteil 28 ist eine Antriebseinheit 40 angeordnet, die beispielsweise einen Elektromotor umfassen kann und mit der der Rotor 16 zur Bereitstellung der Pumpwirkung drehend antreibbar ist.

Ferner weist die Pumpe 10 ein vorvakuumseitiges Lager 42 auf, welches zur drehbaren Lagerung des Rotors 16 gegenüber dem Unterteil 28 und dem damit verbundenen Stator ausgebildet ist. Das vorvakuumseitige Lager 42 ist dazu eingerichtet, radiale und axiale Lagerkräfte aufzunehmen und ist vorliegend als geschmiertes Wälzlager ausgebildet.

An ihrer Hochvakuumseite weist die Pumpe 10 ein weiteres, als Permanentmagnetlager ausgebildetes Lager 44 auf, das eine rotorseitige Lagerhälfte und eine statorseitige Lagerhälfte umfasst und das eine drehbare Lagerung des Rotors 16 gegenüber dem Stator bewirkt.

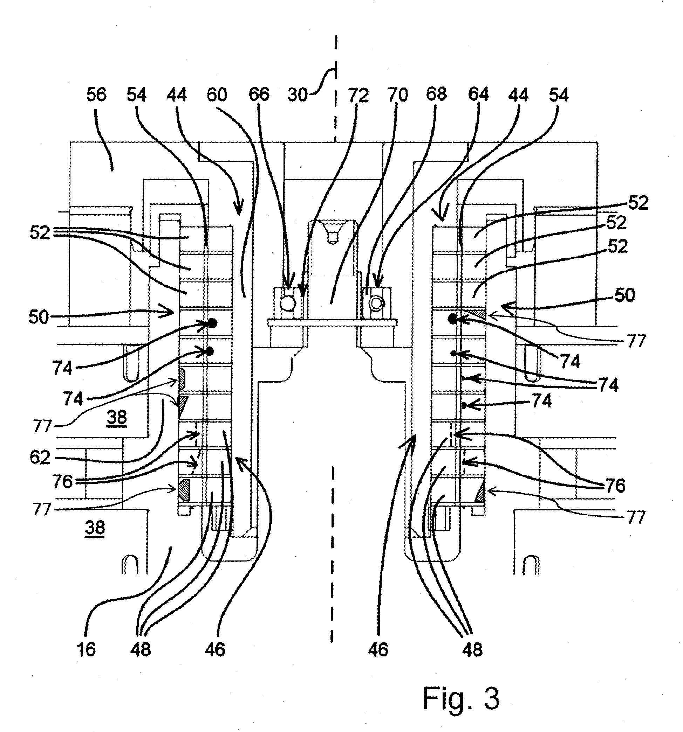

Fig. 3 zeigt den das Permanentmagnetlager 44 umfassenden Ausschnitt der in Fig. 2 gezeigten Pumpe 10 in einer teilweise geschnittenen Detailansicht. Das Lager 44 umfasst einen statorseitigen Magnetringstapel 46 aus mehreren Statormagnetringen 48 und einen rotorseitigen Magnetringstapel 50 aus mehreren Rotormagnetringen 52. Die Magnetringe 48, 52 eines Stapels 46, 50 sind dabei in axialer Richtung aufeinander gestapelt und bilden eine zumindest näherungsweise zylindermantelförmige Grundform des jeweiligen Stapels 46, 50.

Der statorseitige Magnetringstapel 46 und der rotorseitige Magnetringstapels 50 sind dabei jeweils im Wesentlichen koaxial zu der Rotationsachse 30 der Pumpe 10 angeordnet, wobei der statorseitige Stapel 46 so innerhalb des rotorseitigen Stapels 50 angeordnet ist, dass die radialen Außenseiten der Rotorringe 48 den radialen Innenseiten der Statorringe 52 gegenüberliegen und zwischen diesen ein zumindest näherungsweise zylindermantelförmiger Spalt 54 mit einer geringen, durch die radiale Erstreckung des Spalts 44 gebildeten Spaltweite ausgebildet ist.

Der Stator weist einen Trägerabschnitt 56 auf, der in der Mitte der Ansaugöffnung 20 angeordnet ist und im vorliegenden Ausführungsbeispiel, wie in Fig. 1 gezeigt, über mehrere in der Ansaugöffnung 20 angeordnete radiale Streben 58 mit dem Gehäuse 14 verbunden ist. Der Trägerabschnitt 56 umfasst einen sich in axialer Richtung erstreckenden, im Wesentlichen zylindermantelförmigen Halteabschnitt 60, der sich in das Innere des statorseitigen Stapels 46 hinein erstreckt, wobei die Statorringe 46 mit ihren radialen Innenseiten jeweils an der radialen Außenseite des Halteabschnitts 60 anliegen und von diesem gehalten werden.

Der Rotor 16 weist ebenfalls einen im Wesentlichen zylindermantelförmigen Halteabschnitt 62 auf, wobei die Rotorringe 52 mit ihren radialen Außenseiten an der radialen Innenseite des Halteabschnitts 62 anliegen und von diesem gehalten werden.

Die Pumpe 10 weist ferner ein Fanglager 64 auf, welches einen drehbaren Anschlag für den Rotor 16 bildet und eine radiale Bewegung des Stators und des Rotors 16 relativ zueinander begrenzt, die z.B. durch von auf die Pumpe 10 einwirkende Stöße oder während des Betriebs der Pumpe 10 auftretende Vibrationen hervorgerufen wird. Dadurch wird verhindert, dass die Ringe 48, 52 der beiden Stapel 46, 50 infolge einer solchen radialen Relativbewegung mechanisch miteinander in Kontakt geraten und das Permanentmagnetlager 44 beschädigt wird.

Das Fanglager 64 umfasst ein im Inneren des Permanentmagnetlagers 44 angeordnetes, als Kugellager ausgebildetes Wälzlager 66, welches den Trägerabschnitt 56 drehbar mit einer als Anschlag dienenden Fanghülse 68 verbindet. Der Rotor 16 weist einen Zapfenabschnitt 70 auf, der sich in die Fanghülse 68 hinein erstreckt. Zwischen der Fanghülse 68 und dem Zapfenabschnitt 70 ist im Ruhezustand bzw. gleichlaufenden Betrieb der Pumpe 10 ein den gesamten Drehwinkel abdeckender Spalt 72 ausgebildet, so dass die Fanghülse 68 und der Zapfenabschnitt 70 sich in diesem Zustand nicht berühren und der Rotor 16 außer Eingriff mit dem Kugellager 66 steht. Erst bei einer radialen Auslenkung des Rotors 16 berühren sich Fanghülse 68 und Zapfenabschnitt 70, so dass der Rotor 16 mit dem Kugellager 66 in Eingriff gelangt und das Kugellager 66 mit der Fanghülse 68 einen Anschlag für den Rotor 16 bildet, der eine Kollision der Magnetringstapel 46, 50 verhindert. Der Spalt 72 kann dazu eine geringere radiale Spaltweite aufweisen als der Spalt 54. Da der durch das Kugellager 66 gebildete Anschlag eine drehende Relativbewegung des Rotors 16 zulässt, wird eine abrupte Abbremsung des Rotors 16 bei dem Eingreifen des Fanlagers 64 vermieden. Das Kugellager 66 ist als nicht geschmiertes Kugellager 66 ausgebildet, so dass eine Verschmutzung des durch die Pumpe 10 erzeugten Vakuums durch das Kugellager 66 ausgeschlossen ist.

Die Funktion des Permanentmagnetlagers 44 beruht auf den von den Statorringen 48 und Rotorringen 52 erzeugten, einander entgegen gesetzten magnetischen Feldern und den dadurch erzeugten, in radialer Richtung orientierten magnetischen Abstoßungskräften zwischen den Statorringen 48 und den Rotorringen 52. Die Lagerkräfte in Form dieser radialen magnetischen Abstoßungskräfte bewirken eine drehbare radiale Lagerung des Rotors 16 gegenüber dem Stator. Eine bezogen auf die Rotationsachse 30 nicht perfekt rotationssymmetrische Verteilung dieser Lagerkräfte bzw. der ursächlichen magnetischen Felder sowie eine nicht perfekt rotationssymmetrische Massenverteilung des Rotors 16 führen dabei zu einer Exzentrizität der Pumpe 10, welche bei dem Betrieb der Pumpe 10 Vibrationen erzeugt, die den Verschleiß der Pumpe 10 erhöhen, deren Betriebssicherheit beeinträchtigen und die maximale zulässige Drehzahl der Pumpe 10 herabsetzen. Ferner führt eine nicht perfekt rotationssymmetrische Verteilung der magnetischen Eigenschaften des rotorseitigen Teils 50 des Lagers 44 zu einem lokal zeitveränderlichen Streufeld des Magnetlagers 44, welches nachteilige Auswirkungen auf mit der Vakuumpumpe 10 verbundene Komponenten haben kann.

In Fig. 3 sind mehrere Bereiche 74 der Statormagnetringe 48 und Rotormagnetringe 52 gezeigt, die durch eine Bestrahlung mit einem Laser auf eine Temperatur erwärmt wurden, bei der eine Entmagnetisierung des Materials der Magnetringe 48, 52 auftritt, so dass die von diesen Bereichen 74 erzeugte permanente magnetische Flussdichte bzw. Remanenz verringert und die durch das Magnetfeld erzeugten Lagerkräfte des Permanentmagnetlagers 44 in den entsprechenden örtlichen Bereichen geschwächt wurde. Die Bereiche 74 weisen eine Struktur auf, anhand der sich die durchgeführte Erwärmung eindeutig erkennen lässt und die auch von außen in Form von entsprechenden "Brandflecken" der Magnetringe 48, 52 eindeutig erkennbar ist.

Ferner sind in Fig. 3 durch gestrichelte Linien Bereiche 76 der Magnetringe 48, 52 angedeutet, die durch mechanische Bearbeitung wie z.B. ein spanabhebendes Materialentfernungsverfahren von den Magnetringen 48, 52 entfernt werden können, um auf diese Weise die von dem Magnetlager 44 erzeugten Lagerkräfte in den entsprechenden Bereichen zu schwächen. Die Entfernung des Materials kann dabei z.B. nur über einen Teilwinkelbereich des jeweiligen Rings 48, 52, beispielsweise über einen Winkelbereich zwischen 45° und 90° erfolgen. Ein entfernter Bereich kann in axialer Richtung betrachtet beispielsweise eine Sichelform aufweisen. Eine solche mechanische Bearbeitung und Materialentfernung wird an den Magnetringen 48, 52 eindeutig in Form von entsprechenden Bearbeitungsspuren, beispielsweise entsprechenden Schleif-, Bohr- oder Drehspuren an der Oberfläche der resultierenden Magnetringe 48, 52 sichtbar. Die Bereiche 76 sind in Fig. 3 der Anschaulichkeit halber übertrieben groß dargestellt.

Die Bereiche 74 und 76 sind jeweils an den den Spalt 54 begrenzenden und einander gegenüberliegenden Oberflächen des rotorseitigen Lagerteils 50 und des statorseitigen Lagerteils 46 angeordnet, d.h. an der radialen Innenfläche des rotorseitigen Lagerteils 50 bzw. der Rotorringe 52 und an der radialen Außenfläche des statorseitigen Lagerteils 46 bzw. der Statorringe 48.

Der rotorseitige Lagerteil 50 weist außerdem in Fig. 3 schraffiert dargestellte Bereiche 77 auf, in denen die permanentmagnetischen Eigenschaften des rotorseitigen Lagerteils 50 in der vorstehend in Bezug auf die Bereiche 74, 76 beschriebenen Weise durch Materialentfernung oder Entmagnetisierung verändert werden können. Die Bereiche 77 sind an der radialen Außenfläche und somit an der von dem statorseitigen Lagerteil 46 abgewandten Oberfläche des rotorseitigen Lagerteils 50 angeordnet und die Veränderung in den Bereichen 77 verändert das Streufeld des Magnetlagers 44 und vermeidet insbesondere ein störendes Wechselfeld bei dem Betrieb der Vakuumpumpe 10 oder reduziert dieses.

Durch die vorstehend beschriebene Wärmebehandlung bzw. mechanische Bearbeitung in den Bereichen 74, 76, 77 werden die von dem Magnetlager 44 erzeugten Lagerkräfte und das erzeugte Streufeld örtlich gezielt und flexibel so angepasst, dass eine ursprüngliche Exzentrizität der Pumpe 10 bzw. der Rotationseinheit 26 verringert wird und die Pumpe 10 bzw. Rotationseinheit 26 zentriert wird und ein störendes Wechselstreufeld minimiert wird. Somit kann ungeachtet einer solchen ursprünglichen Exzentrizität und eines ursprünglichen Streufelds eine Pumpe 10 bzw. eine Rotationseinheit 26 mit den gewünschten gleichmäßigen Laufeigenschaften auch bei hohen Drehzahlen und den gewünschten Streufeldeigenschaften geschaffen werden. Die nachträgliche Zentrierung und Streufeldveränderung hat den weiteren Vorteil, dass auch Komponenten wie z.B. Statormagnetringe 48 und/oder Rotormagnetringe 52 eingesetzt werden können, die höheren Herstellungstoleranzen unterliegen und folglich nur geringeren Anforderungen an deren Präzision genügen, wodurch die Herstellungskosten für eine entsprechende Pumpe 10 bzw. Rotationseinheit 26 mit den gewünschten günstigen Lauf- und Streufeldeigenschaften verringert werden.

### Bezugszeichenliste

- 10: Vakuumpumpe
- 14: Gehäuse
- 16: Rotor
- 18: Saugflansch
- 20: Ansaugöffnung
- 22: Vorvakuumflansch
- 24: Gasaustrittsöffnung
- 26: Rotationseinheit
- 28: Unterteil
- 30: Rotationsachse
- 32: Statorscheibe
- 34: Distanzelement
- 36: Rotorwelle
- 38: Rotorscheibe
- 40: Antriebseinheit
- 42: Kugellager
- 44: Permanentmagnetlager
- 46: statorseitiger Magnetringstapel
- 48: statorseitiger Magnetring
- 50: rotorseitiger Magnetringstapel
- 52: rotorseitiger Magnetring
- 54: Spalt
- 56: Trägerabschnitt
- 58: Strebe
- 60, 62: Halteabschnitt
- 64: Fanglager
- 66: Kugellager
- 68: Fanghülse
- 70: Zapfenabschnitt
- 72: Spalt
- 74, 76, 77: Bereich

## Patentansprüche

1. Verfahren zum Zentrieren einer Vakuumpumpe (10) und/oder zum Reduzieren eines magnetischen Streufelds einer Vakuumpumpe (10), insbesondere einer Turbomolekularpumpe, oder einer Rotationseinheit (26) für eine Vakuumpumpe (10), insbesondere für eine Turbomolekularpumpe, wobei die Vakuumpumpe (10) oder die Rotationseinheit (26) einen Rotor (16) und einen Stator mit wenigstens einem Permanentmagnetlager (44) aufweist, welches zur gegenseitigen drehbaren Lagerung des Rotors (16) und des Stators ausgebildet ist,
**dadurch gekennzeichnet, dass**
ausgehend von einem Exzentrizitätszustand und/oder ausgehend von einem magnetischen Streufeldzustand die Form und/oder die materialspezifischen permanentmagnetischen Eigenschaften des Lagers (44) verändert werden, um dadurch das von dem Lager (44) erzeugte Magnetfeld zur Verringerung der Exzentrizität und/oder des von dem Lager (44) zumindest im Betrieb der Vakuumpumpe (10) erzeugten magnetischen Streufelds zu verändern.

2. Verfahren nach Anspruch 1,
**dadurch gekennzeichnet, dass**
der Rotor (16) und der Stator zur Bildung des Magnetlagers (44) jeweils wenigstens einen permanentmagnetischen Ring (48, 52), bevorzugt einen Ringstapel (46, 50), aufweisen und zur Verringerung der Exzentrizität und/oder des magnetischen Streufelds wenigstens einer der Ringe (48, 52) hinsichtlich der Form und/oder der materialspezifischen permanentmagnetischen Eigenschaften verändert wird.

3. Verfahren nach Anspruch 1 oder 2,
**dadurch gekennzeichnet, dass**
die Exzentrizität und/oder das magnetische Streufeld gemessen und die Veränderung abhängig von der gemessenen Exzentrizität und/oder abhängig von dem gemessenen magnetischen Streufeld derart vorgenommen wird, dass die Exzentrizität und/oder das magnetische Streufeld verringert wird.

4. Verfahren nach einem der vorstehenden Ansprüche,
**dadurch gekennzeichnet, dass**
die Exzentrizität des Rotors (16) ermittelt und eine Veränderung der Form und/oder der materialspezifischen permanentmagnetischen Eigenschaft des rotorseitigen Teils (50) des Lagers (44) derart vorgenommen wird, dass die Exzentrizität des Rotors (16) verringert wird, und dass die Exzentrizität des Stators ermittelt und eine Veränderung der Form und/oder der materialspezifischen permanentmagnetischen Eigenschaft des statorseitigen Teils (46) des Lagers (44) derart vorgenommen wird, dass die Exzentrizität des Stators verringert wird.

5. Verfahren nach einem der vorstehenden Ansprüche,
**dadurch gekennzeichnet, dass**
zur Verringerung des magnetischen Streufelds die Form und/oder die materialspezifischen permanentmagnetischen Eigenschaften des rotorseitigen Teils (50) des Lagers (44), insbesondere eines oder mehrerer Rotorringe (52), verändert werden.

6. Verfahren nach einem der vorstehenden Ansprüche,
**dadurch gekennzeichnet,**
**dass** zur Verringerung der Exzentrizität die Form und/oder die materialspezifischen permanentmagnetischen Eigenschaften in einem Bereich (74, 76) des rotorseitigen Teils (50) und/oder des statorseitigen Teils (46) des Lagers (44), insbesondere zumindest eines Rotorrings (52) und/oder zumindest eines Statorrings (48), verändert werden, der eine zu dem jeweils anderen Teil (46, 50) des Lagers (44) hin weisende Oberfläche bildet, und/oder
**dass** zur Verringerung des magnetischen Streufelds die Form und/oder die materialspezifischen permanentmagnetischen Eigenschaften in einem Bereich (77) des rotorseitigen Teils (50) des Lagers (44), insbesondere zumindest eines Rotorrings (52), verändert werden, der eine von dem statorseitigen Teil (46) des Lagers (44) weg weisende Oberfläche bildet.

7. Verfahren nach einem der vorstehenden Ansprüche,
**dadurch gekennzeichnet, dass**
von dem Lager (44), insbesondere von zumindest einem Rotorring (52) und/oder von wenigstens einem Statorring (48), Material entfernt wird, um das Magnetfeld zu verändern.

8. Verfahren nach Anspruch 7,
**dadurch gekennzeichnet, dass**
das Material durch ein spanabhebendes Verfahren entfernt wird, welches vorzugsweise aus der Gruppe Schleifen, Bohren und Drehen ausgewählt ist.

9. Verfahren nach einem der vorstehenden Ansprüche,
**dadurch gekennzeichnet, dass**
das Lager (44), insbesondere zumindest ein Rotorring (52) und/oder wenigstens ein Statorring (48), zumindest in einem Bereich (74) entmagnetisiert wird.

10. Verfahren nach Anspruch 9,
**dadurch gekennzeichnet, dass**
das Lager (44), insbesondere zumindest ein Rotorring (52) und/oder wenigstens ein Statorring (48), zumindest in einem Bereich (74) auf eine Temperatur erwärmt wird, oberhalb der das permanentmagnetische Material des Lagers (44) seine permanentmagnetische Eigenschaft dauerhaft zumindest teilweise verliert.

11. Verfahren nach Anspruch 10,
**dadurch gekennzeichnet, dass**
das Lager (44) durch Bestrahlen mit Laserstrahlung erwärmt wird.

12. Vakuumpumpe (10), insbesondere Turbomolekularpumpe, oder Rotationseinheit (26) für eine Vakuumpumpe (10), insbesondere für eine Turbomolekularpumpe,
welche einen Rotor (16) und einen Stator mit wenigstens einem Permanentmagnetlager (44) aufweist, welches zur gegenseitigen drehbaren Lagerung des Rotors (16) und des Stators ausgebildet ist,
**dadurch gekennzeichnet, dass**
die Form und/oder die materialspezifischen permanentmagnetischen Eigenschaften des Lagers (44) ausgehend von einem Exzentrizitätszustand und/oder ausgehend von einem magnetischen Streufeldzustand verändert worden sind, um dadurch das von dem Lager erzeugte Magnetfeld zur Verringerung der Exzentrizität und/oder des von dem Lager zumindest im Betrieb der Vakuumpumpe erzeugten magnetischen Streufelds zu verändern.

13. Vorrichtung nach Anspruch 12,
**dadurch gekennzeichnet,**
**dass** von dem Lager (44), insbesondere von zumindest einem Rotorring (52) und/oder von wenigstens einem Statorring (48), Material entfernt worden ist, bevorzugt durch ein spanabhebendes Verfahren, welches vorzugsweise aus der Gruppe Schleifen, Bohren und Drehen ausgewählt ist und/oder
**dass** das Lager (44), insbesondere zumindest ein Rotorring (52) und/oder wenigstens ein Statorring (48), zumindest in einem Bereich (74) auf eine Temperatur erwärmt worden ist, oberhalb der das Material des Lagers (44) seine permanentmagnetische Eigenschaft dauerhaft zumindest teilweise verliert.

14. Vorrichtung nach einem der Ansprüche 12 oder 13,
**dadurch gekennzeichnet,**
**dass** die Form und/oder die materialspezifischen permanentmagnetischen Eigenschaften in einem Bereich (74, 76) des rotorseitigen Teils (50) und/oder des statorseitigen Teils (46) des Lagers (44), insbesondere zumindest eines Rotorrings (52) und/oder zumindest eines Statorrings (48), verändert worden sind, der eine zu dem jeweils anderen Teil (46, 50) des Lagers (44) hin weisende Oberfläche bildet, und/oder dass die Form und/oder die materialspezifischen permanentmagnetischen Eigenschaften in einem Bereich (77) des rotorseitigen Teils (50) des Lagers (44), insbesondere zumindest eines Rotorrings (52), verändert worden sind, der eine von dem statorseitigen Teil (46) des Lagers (44) weg weisende Oberfläche bildet.

## Claims

1. A method of centering a vacuum pump (10) and/or of reducing a magnetic scatter field of a vacuum pump (10), in particular of a turbomolecular pump, or of a rotation unit (26) for a vacuum pump (10), in particular for a turbomolecular pump, wherein the vacuum pump (10) or the rotation unit (26) has a rotor (16) and a stator having at least one permanent magnet bearing (44) which is configured for the mutual rotatable support of the rotor (16) and of the stator,
**characterized in that**,
starting from an eccentric state and/or starting from a magnetic scatter field state, the shape and/or the permanent magnet properties of the bearing (44) specific to the material are changed to thereby change the magnetic field produced by the bearing (44) to reduce the eccentricity and/or the magnetic scatter field which is at least produced by the bearing (44) in the operation of the vacuum pump (10).

2. A method in accordance with claim 1,
**characterized in that**
the rotor (16) and the stator each have at least one permanent magnet ring (48, 52), preferably a ring stack (46, 50), to form the magnetic bearing (44); and **in that** at least one of the rings (48, 52) is changed with respect to the shape and/or the permanent magnet properties specific to the material to reduce the eccentricity and/or the magnetic scatter field.

3. A method in accordance with claim 1 or claim 2,
**characterized in that**
the eccentricity and/or the magnetic scatter field are/is measured and the change is carried out in dependence on the measured eccentricity and/or in dependence on the measured magnetic scatter field such that the eccentricity and/or the magnetic scatter field are/is reduced.

4. A method in accordance with any one of the preceding claims,
**characterized in that**
the eccentricity of the rotor (16) is determined and a change of the shape and/or of the permanent magnet property of the rotor-side part (50) of the bearing (44) specific to the material is carried out such that the eccentricity of the rotor (16) is reduced; and **in that**
the eccentricity of the stator is determined and a change of the shape and/or of the permanent magnet property of the stator-side part (46) of the bearing (44) specific to the material is carried out such that the eccentricity of the stator is reduced.

5. A method in accordance with any one of the preceding claims,
**characterized in that**
the shape and/or the permanent magnet properties of the rotor-side part (50) of the bearing (44) specific to the material, in particular of one or more rotor rings (52), are/is changed to reduce the magnetic scatter field.

6. A method in accordance with any one of the preceding claims,
**characterized in that**,
to reduce the eccentricity, the shape and/or the permanent magnet properties specific to the material in a region (74, 76) of the rotor-side part (50) and/or of the stator-side part (46) of the bearing (44), in particular of at least one rotor ring (52) and/or of at least one stator ring (48), are/is changed, which region forms a surface facing toward the respective other part (46, 50) of the bearing (44); and/or
**in that**, to reduce the magnetic scatter field, the shape and/or the permanent magnet properties specific to the material in a region (77) of the rotor-side part (50) of the bearing (44), in particular of at least one rotor ring (52), are/is changed, which region forms a surface facing away from the stator-side part (46) of the bearing (44).

7. A method in accordance with any one of the preceding claims,
**characterized in that**
material is removed from the bearing (44), in particular from at least one rotor ring (52) and/or from at least one stator ring (48), in order to change the magnetic field.

8. A method in accordance with claim 7,
**characterized in that**
the material is removed by a cutting process which is preferably selected from the group grinding, drilling and turning.

9. A method in accordance with any one of the preceding claims,
**characterized in that**
the bearing (44), in particular at least one rotor ring (52) and/or at least one stator ring (48), is at least demagnetized in one region (74).

10. A method in accordance with claim 9,
**characterized in that**
the bearing (44), in particular at least one rotor ring (52) and/or at least one stator ring (48), is at least heated in one region (74) to a temperature above which the permanent magnet material of the bearing (44) permanently loses its permanent magnet property at least in part.

11. A method in accordance with claim 10,
**characterized in that**
the bearing (44) is heated by irradiation with laser radiation.

12. A vacuum pump (10), in particular a turbomolecular pump, or a rotation unit (26) for a vacuum pump (10), in particular for a turbomolecular pump, which has a rotor (16) and a stator having at least one permanent magnet bearing (44) which is configured for the mutual rotatable support of the rotor (16) and of the stator,
**characterized in that**,
starting from an eccentric state and/or starting from a magnetic scatter field state, the shape and/or the permanent magnet properties of the bearing (44) specific to the material have been changed to thereby change the magnetic field produced by the bearing to reduce the eccentricity and/or the magnetic scatter field which is at least produced by the bearing in the operation of the vacuum pump.

13. An apparatus in accordance with claim 12,
**characterized in that**
material has been removed from the bearing (44), in particular from at least one rotor ring (52) and/or from at least one stator ring (48), preferably by a cutting process which is preferably selected from the group grinding, drilling and turning; and/or
**in that** the bearing (44), in particular at least one rotor ring (52) and/or at least one stator ring (48), has at least been heated in one region (74) to a temperature above which the material of the bearing (44) permanently loses its permanent magnet property at least in part.

14. An apparatus in accordance with one of the claims 12 or 13,
**characterized in that**
the shape and/or the permanent magnet properties specific to the material in a region (74, 76) of the rotor-side part (50) and/or of the stator-side part (46) of the bearing (44), in particular of at least one rotor ring (52) and/or of at least one stator ring (48), have/has been changed, which region forms a surface facing toward the respective other part (46, 50) of the bearing (44); and/or
**in that** the shape and/or the permanent magnet properties specific to the material in a region (77) of the rotor-side part (50) of the bearing (44), in particular of at least one rotor ring (52), have/has been changed, which region forms a surface facing away from the stator-side part (46) of the bearing (44).

## Revendications

1. Procédé pour centrer une pompe à vide (10) et/ou pour réduire un champ de dispersion magnétique d'une pompe à vide (10), en particulier d'une pompe turbomoléculaire, ou d'une unité rotative (26) pour une pompe à vide (10), en particulier pour une pompe turbomoléculaire, dans lequel la pompe à vide (10) ou l'unité rotative (26) comprend un rotor (16) et un stator avec au moins un palier magnétique permanent (44), qui est réalisé pour le montage rotatif réciproque du rotor (16) et du stator,
**caractérisé en ce que**
partant d'un état d'excentricité et/ou partant d'un état du champ de dispersion magnétique, on modifie la forme et/ou les propriétés magnétiques permanentes spécifiques au matériau du palier (44) afin de modifier ainsi le champ magnétique engendré par le palier (44) afin de réduire l'excentricité, et/ou on modifie le champ de dispersion magnétique engendré par le palier (44) au moins en fonctionnement de la pompe à vide (10).

2. Procédé selon la revendication 1,
**caractérisé en ce que** le rotor (16) et le stator comprennent, pour réaliser le palier magnétique (44), chacun au moins un anneau magnétique permanent (48, 52) et de préférence un empilement d'anneaux (46, 50) et, afin de réduire l'excentricité et/ou le champ de dispersion magnétique, on modifie l'un au moins des anneaux (48, 52) quant à la forme et/ou quant aux propriétés magnétiques permanentes spécifiques au matériau.

3. Procédé selon la revendication 1 ou 2,
**caractérisé en ce que** l'excentricité et/ou le champ de dispersion magnétique est mesurée, et la modification est effectuée en fonction de l'excentricité mesurée et/ou en fonction du champ de dispersion magnétique mesuré, de telle façon que l'on réduit l'excentricité et/ou le champ de dispersion magnétique.

4. Procédé selon l'une des revendications précédentes,
**caractérisé en ce que**
on détermine l'excentricité du rotor (16) et on effectue une modification de la forme et/ou de la propriété magnétique permanente spécifique au matériau de la partie (50) du palier (44) côté rotor de telle façon que l'on réduit l'excentricité du rotor (16), et **en ce que**
on détermine l'excentricité du rotor et on effectue une modification de la forme et/ou de la propriété magnétique permanente spécifique au matériau de la partie (46) du palier (44) côté stator de telle façon que l'on réduit l'excentricité du stator.

5. Procédé selon l'une des revendications précédentes,
**caractérisé en ce que**, pour réduire le champ de dispersion magnétique, on modifie la forme et/ou les propriétés magnétiques permanentes spécifiques au matériau de la partie (50) du palier (44) côté rotor, en particulier de l'un ou de plusieurs des anneaux de rotor (52).

6. Procédé selon l'une des revendications précédentes,
**caractérisé en ce que**
pour réduire l'excentricité, on modifie la forme et/ou les propriétés magnétiques permanentes spécifiques au matériau dans une zone (74, 76) de la partie (50) côté rotor et/ou de la partie (46) côté stator du palier (44), en particulier d'au moins un anneau du rotor (52) et/ou d'au moins un anneau du stator (48) qui constitue une surface tournée vers l'autre partie respective (46, 50) du palier (44), et/ou **en ce que** pour réduire le champ de dispersion magnétique, on modifie la forme et/ou les propriétés magnétiques permanentes spécifiques au matériau dans une zone (77) de la partie côté rotor (50) du palier (44), en particulier d'au moins un anneau du rotor (52), qui constitue une surface tournée en éloignement de la partie côté stator (46) du palier (44).

7. Procédé selon l'une des revendications précédentes,
**caractérisé en ce que** pour modifier le champ magnétique, on enlève du matériau depuis le palier (44), en particulier d'au moins un anneau de rotor (52) et/ou d'au moins un anneau de stator (48).

8. Procédé selon la revendication 7,
**caractérisé en ce que** l'on enlève le matériau par un procédé avec enlèvement de matière, qui est sélectionné de préférence parmi le groupe incluant le polissage, le perçage et le tournage.

9. Procédé selon l'une des revendications précédentes,
**caractérisé en ce que** le palier (44), en particulier au moins un anneau de rotor (52) et/ou au moins un anneau de stator (48), est désaimanté et ceci dans au moins une zone (74).

10. Procédé selon la revendication 9,
**caractérisé en ce que** le palier (44), en particulier au moins un anneau de rotor (52) est/ou au moins un anneau du stator (48) est réchauffé dans au moins une région (74) à une température au-dessus de laquelle le matériau magnétique permanent du palier (44) perd au moins partiellement de façon durable sa propriété magnétique permanente.

11. Procédé selon la revendication 10,
**caractérisé en ce que** le palier (44) est chauffé par incidence d'un faisceau laser.

12. Pompe à vide (10), en particulier pompe turbomoléculaire ou unité rotative (26) pour une pompe à vide (10), en particulier pour une pompe turbomoléculaire,
qui comprend un rotor (16) et un stator avec au moins un palier pour aimants magnétiques (44), qui est réalisé en vue d'un montage rotatif réciproque du rotor (16) et du stator,
**caractérisé en ce que** la forme ou les propriétés magnétiques permanentes sensibles au matériau du palier (44) sont modifiées, en partant d'un état d'excentricité et/ou en partant d'un état du champ de dispersion magnétique, afin de modifier grâce à cela le champ magnétique engendré par le palier afin de réduire l'excentricité et/ou de modifier le champ de dispersion magnétique engendré par le palier au moins en fonctionnement de la pompe à vide.

13. Dispositif selon la revendication 12,
**caractérisé en ce que**
on enlève du matériau depuis le palier (44), en particulier au moins un anneau de rotor (52) et/ou au moins un anneau du stator (48), de préférence par un procédé avec enlèvement de matière, qui est sélectionné de préférence parmi le groupe comprenant le polissage, le perçage et le tournage, et/ou **en ce que**
le palier (44) est chauffé, en particulier au moins un anneau du rotor (52) et/ou au moins un anneau du stator (48), au moins dans une zone (74) qui a été chauffé à une température au-dessus de laquelle le matériau du palier (44) perd au moins partiellement de façon durable ses propriétés magnétiques permanentes.

14. Dispositif selon l'une des revendications 12 ou 13,
**caractérisé en ce que**
la forme ou les propriétés magnétiques permanentes spécifiques au matériau sont modifiées dans une zone (74, 76) de la partie côté rotor (50) et/ou de la partie côté stator (46) du palier (44), en particulier d'au moins un anneau du rotor (52) et/ou d'au moins un anneau du stator (48) qui forme une surface tournée vers l'autre partie respective (46, 50) du palier (44), et/ou **en ce que**
la forme ou les propriétés magnétiques permanentes spécifiques au matériau ont été modifiées dans une zone (77) de la partie côté rotor (50) du palier (44), en particulier dans lequel au moins un anneau du rotor (52) a été modifié, qui constitue une surface de la partie côté stator (46) du palier.
